# EUROPÄISCHE PATENTSCHRIFT

(11) **EP 3 049 694 B1**
(45) Veröffentlichungstag und Bekanntmachung des Hinweises auf die Patenterteilung: **11.04.2018**
(21) Anmeldenummer: 14747034.8
(22) Anmeldetag: 04.08.2014
(51) Int. Cl.: F16H 57/08, F16F 15/12, F16F 15/131

(54) **DREHSCHWINGUNGSDÄMPFERANORDNUNG IN EINEM ANTRIEBSSTRANG EINES FAHRZEUGS**
TORSIONAL VIBRATION DAMPING ARRANGEMENT IN A POWERTRAIN OF A VEHICLE
ENSEMBLE AMORTISSEUR DE VIBRATIONS DE TORSION DANS UNE CHAÎNE CINÉMATIQUE D'UN VÉHICULE AUTOMOBILE

(30) Priorität: 23.09.2013 DE 102013219033
(43) Veröffentlichungstag der Anmeldung: 03.08.2016
(73) Patentinhaber: ZF Friedrichshafen AG, 88046 Friedrichshafen (DE)
(72) Erfinder: WECHS, Michael, 88138 Weissensberg (DE); MAUZ, Thomas, 88085 Langenargen (DE); VOLPERT, Bastian, 88048 Friedrichshafen (DE)
(86) Internationale Anmeldenummer: PCT/EP2014/066689
(87) Internationale Veröffentlichungsnummer: WO 2015/039796

(56) Entgegenhaltungen:
- WO-A1-2008/046381
- FR-A1- 2 916 504
- US-A1- 2008 153 656

## Beschreibung

Die Erfindung betrifft eine in einem Gehäuse gelagerte Drehschwingungsdämpferanordnung in einem Antriebsstrang eines Fahrzeugs, mit einem antriebseitigen Übertragungselement und einem abtriebseitigen Übertragungselement.

Drehschwingungsdämpfer werden im Antriebsstrang eines Fahrzeugs beispielsweise zwischen einem Antriebsaggregat und einem Getriebe oder innerhalb eines Getriebes angeordnet, um das Entstehen von übermäßig starken Drehmomentschwingungen zu unterdrücken. Das Hauptmerkmal eines derartigen Drehschwingungsdämpfers besteht darin, dass die Energiespeicherelemente, vorzugsweise Schraubendruckfedern, zwischen einer Primärseite und einer Sekundärseite, d.h. der Eingangs- und der Ausgangsseite, der Drehschwingungsdämpferanordnung angeordnet sind und einen Koppelungsmechanismus darstellen. Die Energiespeicherelemente befinden sich direkt im Kraftfluss, und es findet keine Abstützung gegen ein Gehäuse statt. Aufgrund des beschränkten Bauraumes dieser bekannten Drehschwingungsdämpferanordnungen lässt sich auch nur ein beschränktes Energiespeichervolumen verwirklichen. Zudem sind die Energiespeicherelemente einer Zentrifugalbeschleunigung ausgesetzt, welches teilweise gewollt ist, was aber aufgrund von Reibungseffekten zu Einschränkungen bei der Unterdrückung der Drehungleichförmigkeit führt.

In der DE 20 2008 006 078 U1 ist ein entsprechender Torsionsschwingungsdämpfer insbesondere für den Antriebsstrang eines Fahrzeugs beschrieben, der eine Primärseite und eine gegen die Wirkung einer Dämpferelementeanordnung um eine Drehachse bezüglich der Primärseite drehbare Sekundärseite aufweist, wobei eine Seite von Primärseite und Sekundärseite zwei in axialem Abstand zueinander liegende Deckscheibenelemente aufweist und die andere Seite von Primärseite und Sekundärseite ein zwischen die Deckscheibenelemente eingreifendes Zentralscheibenelement aufweist. Außerdem sind die Dämpferelemente der Dämpferelementeanordnung bezüglich der Deckscheibenelemente und des Zentralscheibenelements zur Drehmomentübertragung abgestützt. Bei diesem Torsionsschwingungsdämpfer lässt sich die Dämpfungskapazität aus Bauraumgründen nicht wesentlich vergrößern, da sich kein großes Energiespeichervolumen mittels Schraubendruckfedern unterbringen lässt. Unkontrollierte Reibungseinflüsse aufgrund der Zentrifugalbeschleunigung sind bei diesem Torsionsschwingungsdämpfer dadurch minimiert, dass die Dämpferelementeanordnung in einem Raumbereich untergebracht ist, der mit einem viskosen Medium gefüllt bzw. teilweise gefüllt ist, so dass sich der radial äußere Bereich des Zentralscheibenelements ebenso wie die Dämpferelemente bei Relativumfangsbewegungen zwischen der Primärseite und der Sekundärseite in diesem viskosen Medium bewegen, wodurch ein Schmiereffekt und gleichzeitig eine Abfuhr von Schwingungsenergie erreicht wird.

Aus der DE 44 22 732 A1 ist eine gattungsgemäße Drehschwingungsdämpferanordnung bekannt. Es handelt sich um einen Torsionsschwingungsdämpfer, der ein antriebseitiges Übertragungselement, zumindest einen relativ zu demselben drehbaren Planetenträger, der mit wenigstens einem Planetenrad versehen ist, das einerseits mit einem Sonnenrad und andererseits mit einem Hohlrad in Eingriff steht und ein abtriebseitiges Übertragungselement aufweist. Eines der Übertragungselemente weist Steuermittel für eine Federeinrichtung auf. Sowohl dem antriebseitigen Übertragungselement als auch dem abtriebseitigen Übertragungselement ist jeweils eine Schwungmasse zugeordnet, von denen zumindest eine über die Federeinrichtung mit wenigsten einem als Zwischenmasse wirksamen Element des Planetengetriebes verbunden ist, wobei die Zwischenmasse für eine von Drehzahl und Drehrichtung der beiden Schwungmassen zueinander abhängige Bewegung antreibbar ist. Auch bei diesem bekannten Torsionsschwingungsdämpfer ist die Federeinrichtung zwischen dem antriebseitigen Übertragungselement sowie dem abtriebseitigen Übertragungselement angeordnet und rotiert mit der gesamten Torsionsschwingungsdämpferbaueinheit, so dass auch hier nur beschränkte Möglichkeiten vorhanden sind, ein großes Energiespeichervolumen unterzubringen und unkontrollierte Reibungseinflüsse aufgrund der Zentrifugalbeschleunigung auszuschalten.

Das Dokument FR 2 916 504 A1 offenbart alle Merkmale des Oberbegriffs des Anspruchs 1 und offenbart eine in einem Gehäuse gelagerte Drehschwingungsdämpferanordnung für den Antriebsstrang eines Fahrzeugs,welche antriebstechnisch zwischen einer Brennkraftmaschine und einem Fahrzeuggetriebe anzuordnen ist, wobei die Drehschwingungsdämpferanordnung ein Getriebe mit einem antriebseitigen Übertragungselement und einem abtriebseitigen Übertragungselement aufweist, wobei das antriebseitige Übertragungselement mit der Antriebswelle der Brennkraftmaschine und das abtriebseitige Übertragungselement mit der Eingangswelle des Fahrzeuggetriebes verbindbar ist, bei der das antriebseitige Übertragungselement als ein erstes Zahnrad ausgebildet ist, welches mit einem auf einer Welle drehfest angeordneten zweiten Zahnrad kämmt. Vor diesem Hintergrund liegt der vorliegenden Erfindung die Aufgabe zugrunde, eine Drehschwingungsdämpferanordnung mit einer möglichst großen Dämpfungskapazität und einem großen Energiespeichervolumen vorzuschlagen. Des Weiteren sollen bei der vorzuschlagenden Drehschwingungsdämpferanordnung Reibungseffekte aufgrund von Zentrifugalbeschleunigung minimiert und ein möglichst großer Verdrehwinkel zwischen dem antriebseitigen Übertragungselement und dem abtriebseitigen Übertragungselement möglich sein, um ein vergleichsweise großes Arbeitsvermögen zu schaffen.

Diese Aufgabe ist durch Drehschwingungsdämpferanordnungen gemäß den Merkmalen der unabhängigen Patentansprüche gelöst. Vorteilhafte Weiterbildungen sind in den zugeordneten Unteransprüchen definiert.

Demnach geht die Erfindung zunächst aus von einer in einem Gehäuse gelagerten Drehschwingungsdämpferanordnung in einem Antriebsstrang eines Fahrzeugs, mit einem antriebseitigen Übertragungselement und einem abtriebseitigen Übertragungselement sowie einem zwischen dem antriebseitigen Übertragungselement und dem abtriebseitigen Übertragungselement angeordneten Planetengetriebe, welches ein Sonnenrad, einen wenigstens ein Planetenrad tragenden Steg und ein Hohlrad aufweist, und mit wenigstens einem am Planetengetriebe angreifenden Energiespeicher- und Dämpfungselement. Bei dieser Drehschwingungsdämpferanordnung ist gemäß der Erfindung vorgesehen, dass eines der Planetengetriebeglieder, nämlich das Sonnenrad oder der Steg oder das Hohlrad, über das wenigstens eine Energiespeicher- und Dämpfungselement an das Gehäuse ankoppelbar ist.

Das Energiespeicher- und Dämpfungselement ist somit nicht im Antriebsstrang zwischen einem antriebseitigen Übertragungselement und einem abtriebseitigen Übertragungselement angeordnet, sondern es ist am Gehäuse der Drehschwingungsdämpferanordnung entweder permanent oder zeitweilig befestigt. Dementsprechend ergeben sich auch keine räumlichen Beschränkungen, wie bei einer Anordnung zwischen einem antriebseitigen Übertragungselement und einem abtriebseitigen Übertragungselement, und es lässt sich im oder am Gehäuse ein großes Energiespeichervolumen realisieren. Des Weiteren ergeben sich auch keine Reibungseffekte aufgrund von Zentrifugalbeschleunigungen, da ja das Energiespeicher- und Dämpfungselement nicht rotiert, wenn es seine Energiespeicher- und Dämpfungsfunktion erfüllt. Erfindungsgemäß wird das eine Planetengetriebeglied an das wenigstens eine Energiespeicher- und Dämpfungselement indirekt und im Betrieb lösbar angekoppelt, dadurch dass ein Freilauf zwischen dem einen Planetetengetriebeglied und dem Energiespeicher- und Dämpfungselement angeordnet ist. Des Weiteren sind auch schaltbare Freiläufe bekannt, die es erlauben, einen Freilauf wahlweise zu sperren oder freizugeben oder die Sperrrichtung des Freilaufs umzukehren. Auch derartige, schaltbare Freiläufe sind im Zusammenhang mit der Drehschwingungsdämpferanordnung gemäß der Erfindung verwendbar.

Wenigstens ein Planetengetriebesatz kann innerhalb eines Getriebes im Antriebsstrang eines Fahrzeugs angeordnet sein, wobei wenigstens eines der Planetetengetriebeglieder wenigstens eines Planetengetriebesatzes über wenigstens ein Energiespeicher- und Dämpfungselement an das Gehäuse ankoppelbar ist. Auf diese Weise lässt sich ein einfaches Planetenschaltgetriebe verwirklichen, bei dem die Drehschwingungsdämpferanordnung immer dann wirksam ist, wenn wenigstens eines der Planetetengetriebeglieder wenigstens eines Planetengetriebesatzes über wenigstens ein Energiespeicher- und Dämpfungselement an das Gehäuse angekoppelt ist.

Wenn das Getriebe wenigstens zwei Planetetengetriebesätze mit Gehäuseanbindung aufweist, kann eines der Planetetengetriebeglieder eines jeden der wenigstens zwei Planetetengetriebesätze mit Gehäuseanbindung an das Gehäuse ankoppelbar sein und wechselweise betätigbar sein, wobei hierfür eine parallele und/oder serielle Verschaltung an das Gehäuse möglich ist.

Diese Möglichkeit ist besonders vorteilhaft bei einer Anordnung der Planetengetriebesätze in einem Planetenautomatgetriebe, die sich dann mitbenutzen lassen, ohne dass zusätzliche Planetengetriebe mit Gehäuseanbindung erforderlich sind.

Insbesondere Planetenautomatgetriebe mit zumindest weitgehend zylindrischem Getriebegehäuse eignen sich dafür, ein großes Energiespeichervolumen für Schraubendruckfedern unterzubringen, wenn diese in einer zumindest abschnittweise nach radial innen offenen Umfangsnut im Gehäuse angeordnet werden. Im Getriebegehäuse lässt sich eine solche Umfangsnut mit sehr viel größerem Querschnitt unterbringen, als Raum für einen mitrotierenden Torsionsschwingungsdämpfer vorhanden wäre. Des Weiteren lässt sich wesentlich mehr Energiespeichervolumen zur Drehschwingungsdämpfung zur Verfügung stellen, wenn die Umfangsnut in axialer Richtung des Gehäuses spiralförmig über mehr als eine Umfangslänge verläuft.

Hierbei ist bevorzugt vorgesehen, dass die Schraubendruckfeder sowie das zugehörige Dämpfungsglied des Energiespeicher- und Dämpfungselements in Umfangsrichtung in die Umfangsnut des Getriebegehäuses eingelegt sind, und sich mit einem Ende an einem Planetengetriebeglied (Sonne, Steg oder Hohlrad) sowie mit ihrem anderen Ende an einem Anschlag in der spiralförmigen Umfangsnut abstützen.

Bei dem genannten Fahrzeuggetriebe kann es beispielsweise um ein Planetenautomatgetriebe, ein Stirnradautomatgetriebe oder ein automatisches Gruppengetriebe mit einem Vorschaltgetriebe, einem Hauptgetriebe und/oder einem Bereichsgetriebe handeln, wobei die einzelnen Teilgetriebe als Stirnradgetriebe oder als Planetengetriebe ausgebildet sind.

Hinsichtlich des in der Drehschwingungsdämpferanordnung vorhandenen Planetenradsatzes kann vorgesehen sein, dass dieses als Minusgetriebe mit einer Standübersetzung mit einem Wert kleiner Null oder als Plusgetriebe mit einer Standübersetzung mit einem Wert größer Null ausgebildet ist.

Die Planetenräder des Planetengetriebes der Drehschwingungsdämpferanordnung können als Stufenplanetenräder, als Stirnräder oder als Kegelräder ausgebildet sein.

Nachfolgend wird eine zweite Bauform der Drehschwingungsdämpferanordnung beschrieben, welche die gleiche gestellte Aufgabe löst und dem Grundprinzip der Erfindung folgt. Auch diese Drehschwingungsdämpferanordnung ist eingangsseitig mit einer Brennkraftmaschine und ausgangsseitig mit einem Fahrzeuggetriebe verbindbar, wobei das Fahrzeuggetriebe die Übersetzungen für den Fahrzeugantrieb bereitstellt. Die Drehschwingungsdämpferanordnung gemäß der zweiten Bauform verfügt ebenfalls über ein Getriebe, welches jedoch anders als das bisher beschriebene Planetengetriebe eine Standübersetzung mit dem Wert Eins aufweist, so dass dessen Eingangsdrehzahl der Ausgangsdrehzahl entspricht. Dieses Getriebeverhalten ist besonders dann vorteilhaft, wenn eine gemäß der Erfindung ausgebildete Drehschwingungsdämpferanordnung bei deren Einbau in einen schon vorhandenen Antriebsstrang die dortigen, insbesondere durch das Fahrzeuggetriebe bereitgestellten Übersetzungen fahrzeuggetriebeeingangsseitig nicht verändern soll.

Auch die zweite Bauform der Drehschwingungsdämpferanordnung ist in einem Gehäuse aufgenommen sowie in einem Antriebsstrang eines Fahrzeugs antriebstechnisch zwischen einer Brennkraftmaschine und dem schon genannten Fahrzeuggetriebe angeordnet. Ebenso wie bei der ersten Bauform weist die Drehschwingungsdämpferanordnung entsprechend der zweiten Bauform ein Getriebe mit einem antriebseitigen Übertragungselement und einem abtriebseitigen Übertragungselement auf. Das antriebseitige Übertragungselement ist mit der Antriebswelle der Brennkraftmaschine und das abtriebseitige Übertragungselement ist mit der Eingangswelle des Fahrzeuggetriebes verbindbar. Das antriebseitige Übertragungselement ist als ein erstes Zahnrad ausgebildet ist, welches mit einem auf einer Welle drehfest angeordneten zweiten Zahnrad kämmt. Auf dieser Welle ist ein drittes Zahnrad drehfest angeordnet, welches mit dem als viertes Zahnrad ausgebildeten abtriebseitigen Übertragungselement im Zahneingriff ist. Die zweite Bauform der Drehschwingungsdämpferanordnung weist wenigstens einen Träger auf, der die genannte Welle, ein Hohlrad oder ein Sonnenrad des Getriebes lagert. An dem Träger ist ein Energiespeicher- und Dämpfungselement befestigt, welches wenigstens ein Dämpfungsglied und wenigstens eine Schraubendruckfeder aufweist, die in Wirkrichtung parallel zueinander angeordnet sind. Das Energiespeicher- und Dämpfungselement ist radial außen mit dem Gehäuse verbunden oder mit diesem Gehäuse über eine Kupplung oder Bremse verbindbar.

Erkennbar handelt es sich bei dem in der Drehschwingungsdämpferanordnung gemäß der zweiten Bauform angeordneten Getriebe nicht um ein klassisches Planetengetriebe beziehungsweise um einen klassischen Planetengetriebesatz, denn bei diesem Getriebe fehlt eines der Elemente Sonnenrad, Hohlrad, und Steg bzw. Planetenträger, dafür ist eines der vorhandenen Elemente Sonnenrad, Hohlrad, und Steg bzw. Planetenträger doppelt vorhanden. Der Vorteil dieser Getriebestruktur besteht wie beschrieben darin, dass es eine Übersetzung von Eins hat.

Bei der Drehschwingungsdämpferanordnung gemäß der zweiten Bauform kann allein oder zusätzlich zu einem oder mehreren der bisher genannten Merkmale der ersten Bauform der Drehschwingungsdämpferanordnung vorgesehen sein, dass das antriebseitige Übertragungselement und das abtriebseitige Übertragungselement des Getriebes als erstes Stirnrad beziehungsweise als viertes Stirnrad ausgebildet sind, die mit dem zweiten Stirnrad beziehungsweise dem dritten Stirnrad kämmen. Dabei kann gemäß einer anderen Weiterbildung vorgesehen sein, dass das dritte Stirnrad und das vierte Stirnrad außerdem mit einem einzigen Hohlrad des Getriebes kämmen.

Entsprechend einer anderen Ausführungsform kann vorgesehen sein, dass das antriebseitige Übertragungselement des Getriebes der Drehschwingungsdämpferanordnung gemäß der zweiten Bauform als ein erstes Hohlrad und das abtriebseitige Übertragungselement dieses Getriebes als ein zweites Hohlrad ausgebildet ist, die mit dem zweiten Stirnrad beziehungsweise dem dritten Stirnrad kämmen. Hierbei kann zusätzlich vorgesehen sein, dass das zweite Stirnrad und das dritte Stirnrad außerdem mit einem einzigen Sonnenrad des Getriebes der Drehschwingungsdämpferanordnung gemäß der zweiten Bauform kämmen.

Gemäß einer weiteren Ausführungsform ist vorgesehen, dass das dritte Stirnrad des Getriebes der Drehschwingungsdämpferanordnung auf einem ersten Wellenabschnitt und das vierte Stirnrad auf einem zweiten Wellenabschnitt einer geteilten Welle drehfest angeordnet sind. Die Teilung der Welle in zwei Wellenabschnitte ermöglicht die Ankopplung des Energiespeicher- und Dämpfungselements an das Sonnenrad des Getriebes der Drehschwingungsdämpferanordnung.

Die Erfindung wird nachstehend anhand mehrerer, in der beigefügten Zeichnung dargestellter Ausführungsbeispiele weiter erläutert. In der Zeichnung zeigt
Fig. 1 eine schematische Teil-Längsschnittdarstellung einer nicht beanspruchten Drehschwingungsdämpferanordnung,
Fig. 2 eine schematische Teil-Längsschnittdarstellung einer nicht beanspruchten Drehschwingungsdämpferanordnung,
Fig. 3 eine schematische Teil-Längsschnittdarstellung einer nicht beanspruchten Drehschwingungsdämpferanordnung,
Fig. 4 eine schematische Teil-Längsschnittdarstellung einer nicht beanspruchten Drehschwingungsdämpferanordnung,
Fig. 5 eine schematische Teil-Längsschnittdarstellung einer nicht beanspruchten Drehschwingungsdämpferanordnung,
Fig. 6 eine schematische Teil-Längsschnittdarstellung einer nicht beanspruchten Drehschwingungsdämpferanordnung,
Fig. 7 eine schematische Teil-Längsschnittdarstellung einer Drehschwingungsdämpferanordnung gemäß einer ersten Ausführungsform,
Fig. 8 eine schematische Teil-Längsschnittdarstellung einer nicht beanspruchten Drehschwingungsdämpferanordnung,
Fig. 9 eine schematische Teil-Längsschnittdarstellung einer Drehschwingungsdämpferanordnung gemäß einer zweiten Ausführungsform,
Fig. 10 eine schematische Darstellung eines Kraftfahrzeug-Antriebsstranges, bei dem zwischen einer Brennkraftmaschine und einem Fahrzeuggetriebe eine Drehschwingungsdämpferanordnung.
Fig. 11 eine Darstellung wie in Fig. 10, jedoch mit einer Drehschwingungsdämpferanordnung,
Fig. 12 eine Darstellung wie in Fig. 10, jedoch mit einer Drehschwingungsdämpferanordnung gemäß der zweiten Bauform in einer ersten Ausführungsvariante, und
Fig. 13 eine Darstellung wie in Fig. 10, jedoch mit einer Drehschwingungsdämpferanordnung gemäß der zweiten Bauform in einer zweiten Ausführungsvariante.

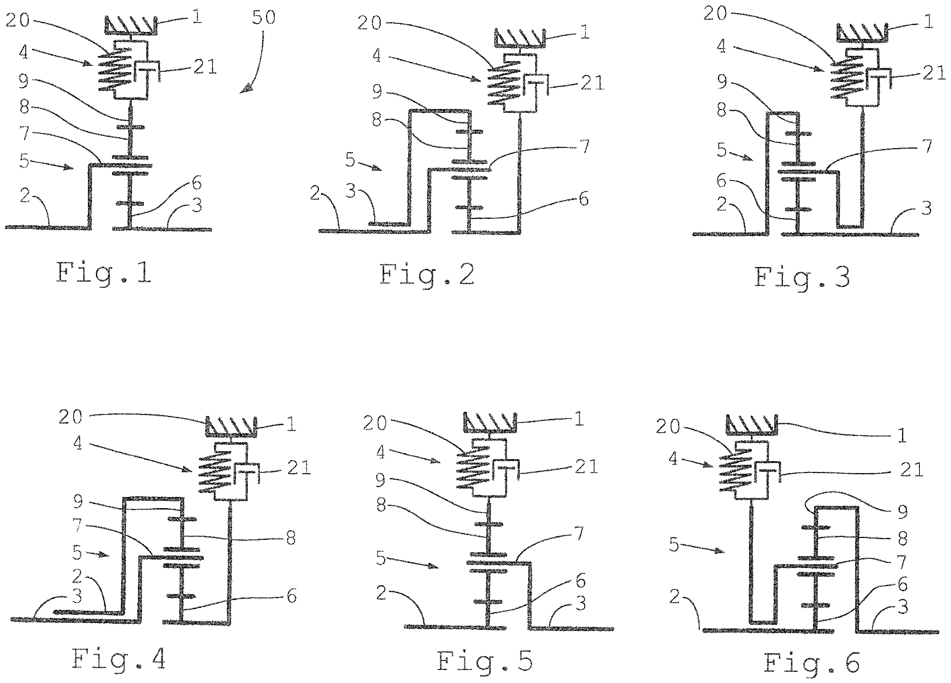

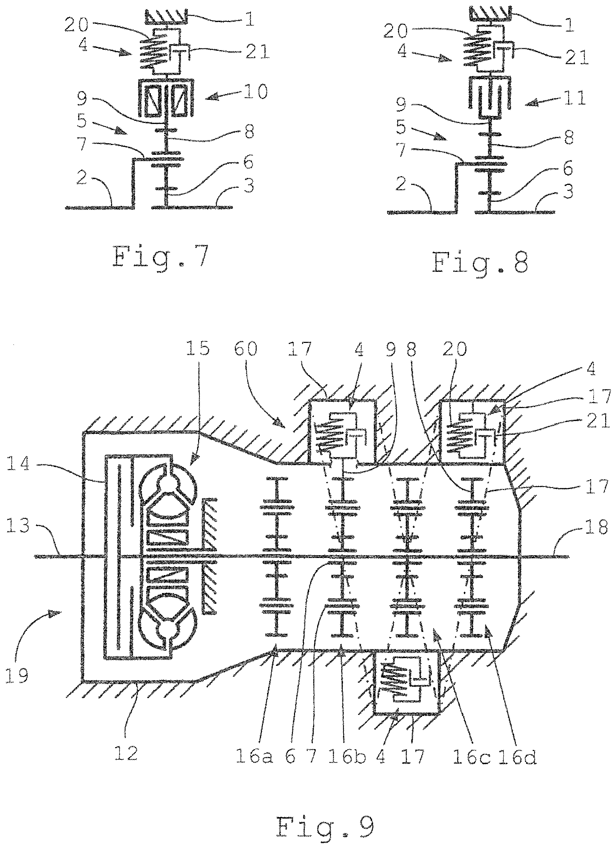

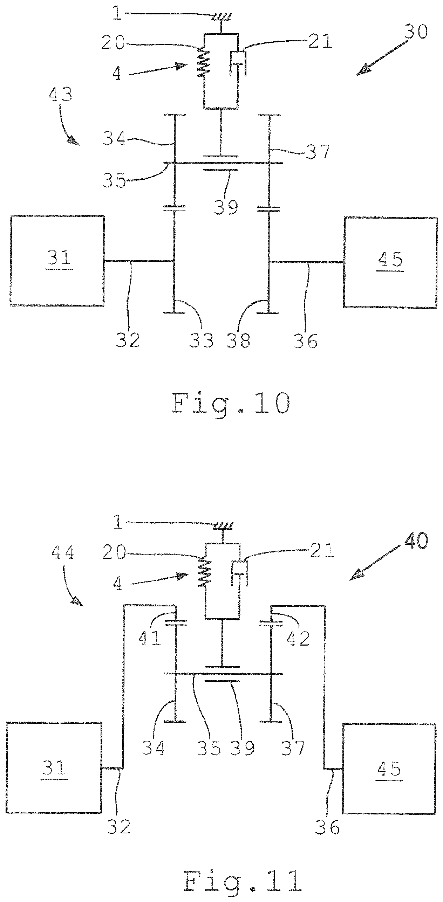

Die Figuren 1 bis 6 zeigen unterschiedliche Möglichkeiten einer Gehäuseankoppelung eines Energiespeicher- und Dämpfungselements 4 an einem schematisch symbolisierten Gehäuse 1, in dem dieses Energiespeicher- und Dämpfungselement 4 und ein Planetengetriebe 5 angeordnet sind. Es handelt sich vorzugsweise um eine Drehschwingungsdämpferanordnung 50 in einem Antriebsstrang eines Kraftfahrzeugs mit einem antriebseitigen Übertragungselement 2 in Form einer Welle und einem abtriebseitigen Übertragungselement 3, ebenfalls in Form einer Welle. Diese Drehschwingungsdämpferanordnung 50 kann in bekannter Weise eingangsseitig mit einer in den Figuren 10 bis 13 dargestellten Brennkraftmaschine 31 und ausgangsseitig mit einem Fahrzeuggetriebe 45 im Bereich einer Reibungskupplung und/oder eines Drehmomentwandlers oder innerhalb des Fahrzeuggetriebes, insbesondere eines in Fig. 9 dargestellten Planetenautomatgetriebes 19, angeordnet sein.

Das Energiespeicher- und Dämpfungselement 4 besteht aus wenigstens einer Schraubendruckfeder 20 und einem dazu parallel geschalteten Dämpfungsglied 21, das als ein Reibungsdämpfer oder als ein hydraulischer Dämpfer ausgebildet sein kann.

Zur besseren grafischen Darstellung sind in den Figuren 1 bis 13 die Energiespeicher- und Dämpfungselemente 4 um 90° in die Zeichenebene geklappt abgebildet.

Das Planetengetriebe 5 besteht aus einem Sonnenrad 6, das bei der Ausführungsform gemäß Fig. 1 mit dem abtriebseitigen Übertragungselement 3 drehfest verbunden ist, einem Steg 7, der im Ausführungsbeispiel gemäß Fig. 1 mit dem antriebseitigen Übertragungselement 2 drehfest verbunden ist und wenigstens ein Planetenrad 8 drehbar führt, welches einerseits mit dem Sonnenrad 6 und andererseits mit einem dieses koaxial umgebenden Hohlrad 9 kämmt.

Gemäß Fig. 1 ist das Hohlrad 9 über das Energiespeicher- und Dämpfungselement 4 an das Gehäuse 1 direkt sowie im Betrieb unlösbar angekoppelt. Das Energiespeicher- und Dämpfungselement 4 bewirkt die Dämpfung von Drehschwingungen im Planetengetriebe 5 zwischen dem antriebseitigen Übertragungselement 2 und dem abtriebseitigen Übertragungselement 3. Das Energiespeicher- und Dämpfungselement 4 lässt sich im Bereich des Gehäuses 1 radial und axial außerhalb des Planetengetriebes 5 unterbringen, wo ein wesentlich größerer Bauraum für das Energiespeicher- und Dämpfungselement 4 zur Verfügung steht, so dass wesentlich mehr Energiespeichervolumen zur Drehschwingungsdämpfung nutzbar ist.

Da das Planetengetriebe 5 aus den drei Gliedern Sonnenrad 6, Steg 7 mit wenigstens einem Planetenrad 8 und dem Hohlrad 9 besteht, lassen sich sechs unterschiedliche Anbindungsvarianten an das Gehäuse 1 realisieren.

Gemäß Fig. 2, welche die zweite Anbindungsvariante an das Gehäuse 1 darstellt, ist das antriebseitige Übertragungselement 2 mit dem Steg 7 und das abtriebseitige Übertragungselement 3 mit dem Hohlrad 9 drehfest gekoppelt, so dass in dieser Ausführungsform das Sonnenrad 6 über das Energiespeicher- und Dämpfungselement 4 an das Gehäuse 1 angekoppelt ist.

Die Anbindungsvariante an das Gehäuse 1 gemäß Fig. 3 zeigt eine drehfeste Verbindung des antriebseitigen Übertragungselements 2 mit dem Hohlrad 9 und des abtriebseitigen Übertragungselements 3 mit dem Sonnenrad 6, so dass bei dieser Anbindungsvariante der Steg 7 mit dem wenigstens einen Planetenrad 8 über das Energiespeicher- und Dämpfungselement 4 an das Gehäuse 1 angekoppelt ist.

Gemäß Fig. 4 ist das antriebseitige Übertragungselement 2 drehfest mit dem Hohlrad 9 gekoppelt, während das abtriebseitige Übertragungselements 3 drehfest mit dem Steg 7 verbunden ist. Dementsprechend ist das Sonnenrad 6 über das Energiespeicher- und Dämpfungselement 4 mit dem Gehäuse 1 gekoppelt.

Bei der Ausführungsform gemäß Fig. 5 ist das antriebseitige Übertragungselement 2 mit dem Sonnenrad 6 drehfest gekoppelt, während das abtriebseitige Übertragungselements 3 drehfest mit dem Steg 7 verbunden ist. Dementsprechend ist das Hohlrad 9 über das Energiespeicher- und Dämpfungselement 4 an das Gehäuse 1 angebunden.

Die Ausführungsform gemäß Fig. 6 zeigt die Umkehrung der Ausführungsform gemäß Fig. 3, wobei das antriebseitige Übertragungselement 2 drehfest mit dem Sonnenrad 6 gekoppelt ist und das abtriebseitige Übertragungselements 3 drehfest mit dem Hohlrad 9 verbunden ist, so dass in diesem Fall wiederum der Steg 7 über das Energiespeicher- und Dämpfungselement 4 an das Gehäuse 1 angebunden ist.

Die Ausführungsform gemäß Fig. 7 entspricht weitgehend der Ausführungsform gemäß Fig. 1, jedoch ist zwischen dem Hohlrad 9 und dem Energiespeicher- und Dämpfungselement 4 ein Freilauf 10 angeordnet, der in seiner einfachsten Ausführungsform das Hohlrad 9 in einer Drehrichtung festhält und in der entgegengesetzten Drehrichtung freigibt. Freiläufe können bekanntermaßen auch schaltbar sein, indem sie dazu eingerichtet sind, wahlweise in die eine Drehrichtung oder in die andere Drehrichtung oder in beide Drehrichtungen zu sperren. Dieser Freilauf 10 lässt sich in analoger Weise bei allen Ausführungsformen gemäß den Figuren 1 bis 6 anordnen.

In Fig. 8 ist eine Ausführungsform dargestellt, die eine wahlweise betätigbare Bremse 11 zwischen dem Hohlrad 9 und dem Energiespeicher- und Dämpfungselement 4 zeigt. Mit Hilfe der Bremse ist es möglich, das Hohlrad 9 in beiden Drehrichtungen zu sperren oder freizugeben. Auch diese Ausführungsform mit der Bremse 11 ist für alle Ausführungsformen gemäß den Figuren 1 bis 6 geeignet.

Fig. 9 zeigt eine sehr vorteilhafte Platzierung einer Drehschwingungsdämpferanordnung 60 mit den Merkmalen der Erfindung in einem vereinfacht dargestellten Planetenautomatgetriebe 19. In ein Getriebegehäuse 12, das im Wesentlichen zylindrisch ausgebildet ist, ist ein antriebseitiges Übertragungselement 13 in Form einer Welle geführt, die mit den Eingangselementen eines Drehmomentwandlers 15 und einer Überbrückungskupplung 14 drehfest verbunden ist. Die Überbrückungskupplung 14 und der Drehmomentwandler 15 lassen sich in bekannter Weise wahlweise betätigen, um eine Drehverbindung zu vier miteinander verschalteten Planetengetriebesätzen 16a, 16b, 16c, 16d herzustellen. Mittels dieser Planetengetriebesätze 16a, 16b, 16c, 16d lassen sich mehrere abgestufte Vorwärtsgänge und ein Rückwärtsgang schalten. Den Ausgang dieses Planetenautomatgetriebe 19 bildet ein abtriebseitiges Übertragungselement 18 in vor einer Ausgangswelle, welche ein Antriebsdrehmoment zu nicht dargestellten Antriebsrädern des Fahrzeugs führt.

Das Getriebegehäuse 12 ist mit einer großvolumigen, in axialer Richtung des Getriebegehäuses 12 spiralförmig über mehr als eine Umfangslänge verlaufende Umfangsnut 17 versehen, in der das Energiespeicher- und Dämpfungselement 4 in Umfangsrichtung verlaufend angeordnet ist. Dargestellt ist das Energiespeicher- und Dämpfungselement 4 um 90° in die Zeichenebene geklappt. Tatsächlich sind die Schraubendruckfeder 20 und das Dämpfungsglied 21 in Umfangsrichtung in die spiralförmig verlaufende Umfangsnut 17 eingelegt und stützen sich mit einem Ende am Hohlrad 9 des Planetetengetriebesatzes 16b ab und mit ihrem anderen Ende an einem nicht dargestellten Anschlag in der spiralförmigen Umfangsnut 17. Das Energiespeichervolumen, das zur Drehschwingungsdämpfung zur Verfügung gestellt wird, lässt sich durch den Querschnitt und die Länge der spiralförmigen Umfangsnut 17 beeinflussen. Je größer der Querschnitt der spiralförmigen Umfangsnut 17 ist, desto größer kann der Durchmesser der Schraubendruckfeder 20 sein, und je mehr Windungen die spiralförmige Umfangsnut 17 aufweist, desto länger kann die Schraubendruckfeder 20 sein, wodurch sich eine hohe Energiespeicherdichte realisieren lässt. Der spiralförmige Verlauf der Umfangsnut 17 am Getriebegehäuse 12 ist durch strichpunktierte Linien angedeutet.

Bei den in Fig. 9 dargestellten drei Energiespeicher- und Dämpfungselementen 4 handelt es sich um eine einzige Schraubendruckfeder 20, welche die ganze Länge der spiralförmigen Umfangsnut 17 einnimmt oder um mehrere in Umfangsrichtung axial hintereinander angeordnete Schraubendruckfedern 20, die sich einerseits am Hohlrad 9 und andererseits in der spiralförmigen Umfangsnut 17 abstützen.

Zwar ist in Fig. 9 nur der zweite Planetengetriebesatz 16b mittels seines Hohlrades 9 über das Energiespeicher- und Dämpfungselement 4 an dem Getriebegehäuse 12 angekoppelt, jedoch ist es ebenso möglich, zwei oder mehr der Planetengetriebesätze 16a, 16b, 16c, 16d analog zum dargestellten Ausführungsbeispiel an das Getriebegehäuse 12 anzukoppeln und diese parallel und/oder seriell zu verschalten, je nachdem, welches der Planetengetriebeglieder 6, 7, 9 der Planetengetriebesätze 16 mit dem Getriebegehäuse 12 je nach Gangwahl durch Abbremsung zu kuppeln sind, so dass immer mindestens ein Energiespeicher- und Dämpfungselement 4 in jedem geschalteten Gang wirksam ist.

Da sich die Energiespeicher- und Dämpfungselemente 4 im Gehäuse 1 beziehungsweise in dem Getriebegehäuse 12 unterbringen lassen, wo im Vergleich zu den bekannten Drehschwingungsdämpfern ein wesentlich größeres Bauraumpotential vorhanden ist, kann erheblich mehr Energiespeichervolumen zur Drehschwingungsdämpfung zur Verfügung gestellt werden, und die Reibungseffekte auf Grund von Radialbeschleunigungen sind nicht groß. Des Weiteren erlaubt es diese Bauweise, einen großen Verdrehwinkel und damit ein großes Arbeitsvermögen des erfindungsgemäßen Drehschwingungsdämpfers vorzusehen.

In den Figuren 10 bis 13 ist jeweils ein Kraftfahrzeug-Antriebsstrang dargestellt, in dem unterschiedliche Varianten einer Drehschwingungsdämpferanordnung 30, 40, 70, 80 gemäß einer zweiten erfindungsgemäßen Bauform angeordnet sind. Allen diesen Varianten ist gemeinsam, dass das in der jeweiligen Drehschwingungsdämpferanordnung 30, 40, 70, 80 verbaute Getriebe 43, 44, 46, 48 kein klassisches Planetengetriebe mit einer Übersetzung größer oder kleiner Eins ist, sondern eine Übersetzung mit dem Wert Eins hat, so dass die Eingangsdrehzahl und die Ausgangsdrehzahl dieses Getriebes 43, 44, 46, 48 identisch sind.

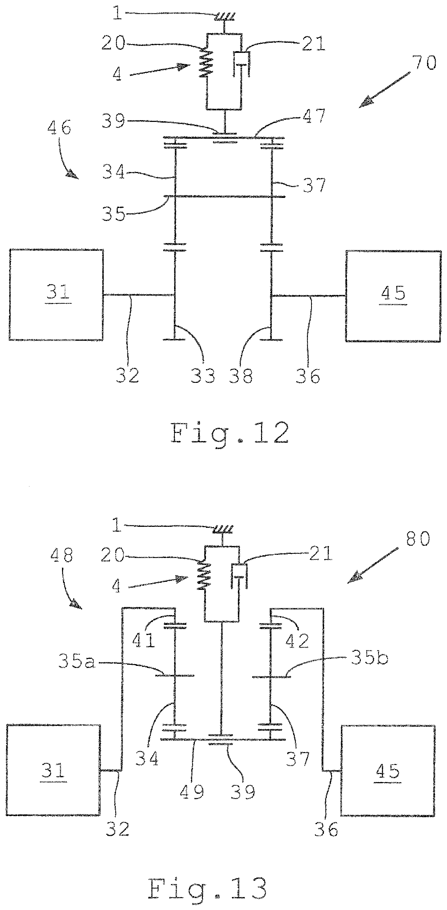

Bei den beiden in den Figuren 10 und 12 dargestellten Varianten der Drehschwingungsdämpferanordnung 30, 70 ist das jeweils eingangsseitige bzw. ausgangsseitige Übertragungselement 33, 38 des Getriebes 43, 46 als Stirnrad ausgebildet, welche mit der Antriebswelle 32 einer Brennkraftmaschine 31 beziehungsweise mit der Eingangswelle 36 eines Fahrzeuggetriebes 45 drehfest verbunden sind. Das jeweilige eingangsseitige Übertragungselement in Form eines ersten Stirnrades 33 kämmt mit einem zweiten Stirnrad 34, welches drehfest auf einer Welle 35 angeordnet ist. Auf dieser Welle 35 ist auch noch ein drittes Stirnrad 37 befestigt, welches mit dem ausgangsseitigen Übertragungselement in Form eines vierten Stirnrades 38 im Zahneingriff ist.

Die Welle 35 des Getriebes 43 wird bei der Variante gemäß Fig. 10 von einem Träger 39 gelagert, an dem das Energiespeicher- und Dämpfungselement 4 befestigt ist. Dieses Energiespeicher- und Dämpfungselement 4 weist ebenso wie bei der ersten Bauform der Drehschwingungsdämpferanordnung 50, 60 eine Schraubendruckfeder 20 und ein in Wirkrichtung parallel dazu angeordnetes Dämpfungsglied 21 auf. Das Energiespeicher- und Dämpfungselement 4 ist radial außen, also trägerfern, mit dem Gehäuse 1 drehfest verbunden.

Bei der Variante gemäß Fig. 12 ist in dem Getriebe 46 der Drehschwingungsdämpferanordnung 70 radial außen ein Hohlrad 47 angeordnet, welches an dem Träger 39 des Energiespeicher- und Dämpfungselements 4 gelagert ist. Das Energiespeicher- und Dämpfungselement 4 ist wie bereits beschrieben ausgebildet und radial außen am Gehäuse 1 befestigt. Das zweite Stirnrad 34 und das dritte Stirnrad 37, die ja beide auf der Welle 35 drehfest angeordnet sind, kämmen auch mit dem Hohlrad 47.

Bei den beiden in den Figuren 11 und 13 dargestellten Varianten der Drehschwingungsdämpferanordnung 40, 80 ist das jeweils eingangsseitige bzw. ausgangsseitige Übertragungselement des Getriebes 44, 48 als Hohlrad 41, 42 ausgebildet, welche mit der Antriebswelle 32 einer Brennkraftmaschine 31 beziehungsweise mit der Eingangswelle 36 eines Fahrzeuggetriebes 45 drehfest verbunden sind. Das jeweilige eingangsseitige Übertragungselement in Form des ersten Hohlrades 41 kämmt mit einem zweiten Stirnrad 34, welches drehfest auf einer Welle 35 angeordnet ist. Auf dieser Welle 35 ist auch noch ein drittes Stirnrad 37 befestigt, welches mit dem ausgangsseitigen Übertragungselement in Form eines zweiten Hohlrades 42 im Zahneingriff ist.

Die Welle 35 des Getriebes 44 wird bei der Variante gemäß Fig. 11 von einem Träger 39 gelagert, an dem das Energiespeicher- und Dämpfungselement 4 befestigt ist. Dieses Energiespeicher- und Dämpfungselement 4 ist so wie bereits im Zusammenhang mit den Figuren 10 und 12 beschrieben ausgebildet sowie angeordnet.

Bei der Variante gemäß Fig. 13 ist in dem Getriebe 48 der Drehschwingungsdämpferanordnung 80 radial innen ein Sonnenrad 49 angeordnet, welches an dem Träger 39 des Energiespeicher- und Dämpfungselements 4 gelagert ist. Das Energiespeicher- und Dämpfungselement 4 ist wie bereits beschrieben ausgebildet und radial außen am Gehäuse 1 befestigt. Das zweite Stirnrad 34 und das dritte Stirnrad 37, die ja auf einer geteilten Welle 35a, 35b drehfest angeordnet sind, kämmen demnach nicht nur mit den Zähnen der eingangsseitigen beziehungsweise ausgangsseitigen Hohlräder 41, 42, sondern auch mit den Zähnen des radial innen angeordneten Sonnenrades 49. Die Welle 35a, 35b ist zweiteilig ausgebildet, um eine schwingungsdämpfende Abstützung der Welle 35a, 35b sowie der daran befestigten Zahnräder 34, 37 über das Energiespeicher- und Dämpfungselement 4 an das Gehäuse 1 zu ermöglichen.

### Bezugzeichenliste

- 1: Gehäuse
- 2: Antriebseitiges Übertragungselement, Welle
- 3: Abtriebseitiges Übertragungselement, Welle
- 4: Energiespeicher- und Dämpfungselement
- 5: Planetengetriebe
- 6: Sonnenrad, Planetengetriebeglied
- 7: Steg, Planetengetriebeglied
- 8: Planetetenrad
- 9: Hohlrad, Planetengetriebeglied
- 10: Freilauf
- 11: Bremse
- 12: Getriebegehäuse
- 13: Antriebseitiges Übertragungselement, Welle
- 14: Überbrückungskupplung
- 15: Drehmomentwandler
- 16a-16d: Planetengetriebesätze
- 17: Umfangsnut
- 18: Abtriebseitiges Übertragungselement, Welle
- 19: Fahrzeuggetriebe, Planetenautomatgetriebe
- 20: Schraubendruckfeder
- 21: Dämpfungsglied
- 30: Drehschwingungsdämpfungsanordnung
- 31: Brennkraftmaschine
- 32: Antriebswelle der Brennkraftmaschine
- 33: Antriebseitiges Übertragungselement, erstes Zahnrad
- 34: Zweites Zahnrad
- 35: Welle
- 35a: Erste Teilwelle, erster Wellenabschnitt
- 35b: Zweite Teilwelle, zweiter Wellenabschnitt
- 36: Getriebeeingangswelle
- 37: Drittes Zahnrad
- 38: Abtriebseitiges Übertragungselement, viertes Zahnrad
- 39: Träger
- 40: Drehschwingungsdämpfungsanordnung
- 41: Antriebseitiges Übertragungselement, 1. Hohlrad
- 42: Abtriebseitiges Übertragungselement, 2. Hohlrad
- 43: Getriebe der Drehschwingungsdämpfungsanordnung 30
- 44: Getriebe der Drehschwingungsdämpfungsanordnung 40
- 45: Fahrzeuggetriebe
- 46: Getriebe der Drehschwingungsdämpfungsanordnung 70
- 47: Hohlrad
- 48: Getriebe der Drehschwingungsdämpfungsanordnung 80
- 49: Sonnenrad
- 50: Drehschwingungsdämpfungsanordnung
- 60: Drehschwingungsdämpfungsanordnung
- 70: Drehschwingungsdämpfungsanordnung
- 80: Drehschwingungsdämpfungsanordnung

## Patentansprüche

1. In einem Gehäuse (1, 12) gelagerte Drehschwingungsdämpferanordnung (30, 40, 50, 60, 70, 80) in einem Antriebsstrang eines Fahrzeugs, mit einem antriebseitigen Übertragungselement (2, 13) und einem abtriebseitigen Übertragungselement (3, 18) sowie einem zwischen dem antriebseitigen Übertragungselement (2, 13) und dem abtriebseitigen Übertragungselement (3, 18) angeordneten Planetengetriebe (5, 16), welches ein Sonnenrad (6), einen wenigstens ein Planetenrad (8) tragenden Steg (7) und ein Hohlrad (9) aufweist, und mit wenigstens einem am Planetengetriebe (5, 16) angreifenden Energiespeicher- und Dämpfungselement (4), wobei eines der Planetengetriebeglieder, nämlich das Sonnenrad (6) oder der Steg (7) oder das Hohlrad (9), über das wenigstens eine Energiespeicher- und Dämpfungselement (4) an das Gehäuse (1, 12) ankoppelbar ist, **dadurch gekennzeichnet, dass** zwischen dem einen Planetengetriebeglied (6, 7, 9) und dem Energiespeicher- und Dämpfungselement (4) ein Freilauf (10) angeordnet ist.

2. Drehschwingungsdämpferanordnung nach Anspruch 1, **dadurch gekennzeichnet, dass** das Planetengetriebe (5, 16) innerhalb eines Fahrzeuggetriebes (5, 16) angeordnet ist.

3. Drehschwingungsdämpferanordnung nach Anspruch 2, **dadurch gekennzeichnet, dass** das Fahrzeuggetriebe (5, 16) als Planetenautomatgetriebe (19), als Stirnradautomatgetriebe, oder als automatisches Gruppengetriebe mit einem Vorschaltgetriebe, einem Hauptgetriebe und/oder einem Bereichsgetriebe ausgebildet ist, wobei die einzelnen Teilgetriebe als Stirnradgetriebe oder als Planetengetriebe ausgebildet sind.

4. Drehschwingungsdämpferanordnung nach Anspruch 3, **dadurch gekennzeichnet, dass** das Planetenautomatgetriebe (19) wenigstens einen Planetengetriebe-satz (16b) mit Gehäuseanbindung aufweist und wenigstens eines der Planetengetriebeglieder (6, 7, 9) wenigstens eines Planetengetriebesatzes (16b) über wenigstens ein Energiespeicher- und Dämpfungselement (4) an das Getriebegehäuse (12) ankoppelbar ist.

5. Drehschwingungsdämpferanordnung nach Anspruch 3, **dadurch gekennzeichnet, dass** das Planetenautomatgetriebe (19) wenigstens zwei Planetengetriebesätze (16a; 16b; 16c; 16d) mit Gehäuseanbindung aufweist, und dass eines der Planetengetriebeglieder (6, 7, 9) eines jeden der wenigstens zwei Planetengetriebesätze (16a; 16b; 16c; 16d) mit Gehäuseanbindung an das Getriebegehäuse (12) ankoppelbar ist.

6. Drehschwingungsdämpferanordnung nach Anspruch 5, **dadurch gekennzeichnet, dass** die Planetengetriebeglieder (6, 7, 9) der wenigstens zwei Planetengetriebesätze (16a; 16b; 16c; 16d) mit Gehäuseanbindung in einer parallelen und/oder seriellen Verschaltung an das Getriebegehäuse (12) ankoppelbar sind.

7. Drehschwingungsdämpferanordnung nach einem der Ansprüche 1 bis 6, **dadurch gekennzeichnet, dass** das Energiespeicher- und Dämpfungselement (4) wenigstens ein Dämpfungsglied (21) und wenigstens eine Schraubendruckfeder (20) aufweist, die in einer Umfangsnut (17) im Getriebegehäuse (12) angeordnet sind.

8. Drehschwingungsdämpferanordnung nach Anspruch 7, **dadurch gekennzeichnet, dass** die Umfangsnut (17) in axialer Richtung des Getriebegehäuses (12) spiralförmig über mehr als eine Umfangslänge verläuft.

9. Drehschwingungsdämpferanordnung nach Anspruch 7 oder 8, **dadurch gekennzeichnet, dass** die Schraubendruckfeder (20) in Umfangsrichtung in die Umfangsnut (17) eingelegt ist und sich mit einem Ende an dem Sonnenrad (6) oder Steg (7) oder Hohlrad (9) abstützt, sowie sich mit ihrem anderen Ende an einem Anschlag in der Umfangsnut (17) abstützt.

10. Drehschwingungsdämpferanordnung nach Anspruch 7 bis 9, **dadurch gekennzeichnet, dass** das Dämpfungsglied (21) in Umfangsrichtung in die Umfangsnut (17) eingelegt ist und sich mit einem Ende an dem Sonnenrad (6) oder Steg (7) oder Hohlrad (9) abstützt, sowie sich mit ihrem anderen Ende an einem Anschlag in der Umfangsnut (17) abstützt.

11. Drehschwingungsdämpferanordnung nach einem der Ansprüche 1 bis 10, **dadurch gekennzeichnet, dass** dessen Planetengetriebe (5, 16a-16d) als Minusgetriebe mit einer Standübersetzung < 0 oder als Plusgetriebe mit einer Standübersetzung > 0 ausgebildet ist.

12. Drehschwingungsdämpferanordnung nach einem der Ansprüche 1 bis 11, **dadurch gekennzeichnet, dass** die Planetenräder (8) des Planetengetriebes (5, 16a-16d) der Drehschwingungsdämpferanordnung als Stufenplanetenräder ausgebildet sind.

13. Drehschwingungsdämpferanordnung nach einem der Ansprüche 1 bis 12, **dadurch gekennzeichnet, dass** die Planetenräder (8) des Planetengetriebes (5, 16a-16d) der Drehschwingungsdämpferanordnung als Stirnräder oder als Kegelräder ausgebildet sind.

14. In einem Gehäuse (1) gelagerte Drehschwingungsdämpferanordnung (30, 40, 70, 80) für den Antriebsstrang eines Fahrzeugs, welche antriebstechnisch zwischen einer Brennkraftmaschine (31) und einem Fahrzeuggetriebe (45) anzuordnen ist,
wobei die Drehschwingungsdämpferanordnung (30, 40, 70, 80) ein Getriebe (43, 44, 46, 48) mit einem antriebseitigen Übertragungselement (33, 41) und einem abtriebseitigen Übertragungselement (38, 42) aufweist,
wobei das antriebseitige Übertragungselement (33, 41) mit der Antriebswelle (32) der Brennkraftmaschine (31) und das abtriebseitige Übertragungselement (38, 42) mit der Eingangswelle (36) des Fahrzeuggetriebes (45) verbindbar ist,
bei der das antriebseitige Übertragungselement (33, 41) als ein erstes Zahnrad ausgebildet ist, welches mit einem auf einer Welle (35; 35a) drehfest angeordneten zweiten Zahnrad (34) kämmt,
bei der auf der Welle (35; 35b) ein drittes Zahnrad (37) drehfest angeordnet ist, welches mit dem als viertes Zahnrad ausgebildeten abtriebseitigen Übertragungselement (38, 42) kämmt,
mit wenigstens einem Träger (39), der die Welle (35; 35a, 35b), ein Hohlrad (47) oder ein Sonnenrad (49) des Getriebes (43, 44, 46, 48) lagert,
wobei an den Träger (39) ein Energiespeicher- und Dämpfungselement (4) angreift, welches wenigstens ein Dämpfungsglied (21) und wenigstens eine Schraubendruckfeder (20) aufweist, die in Wirkrichtung parallel zueinander angeordnet sind,
und bei der das Energiespeicher- und Dämpfungselement (4) radial außen mit dem Gehäuse (1) verbunden oder verbindbar ist.

15. Drehschwingungsdämpferanordnung (30, 70) nach Anspruch 14, **dadurch gekennzeichnet, dass** das antriebseitige Übertragungselement und das abtriebseitige Übertragungselement des Getriebes (43, 46) jeweils als Stirnräder (33, 38) ausgebildet sind.

16. Drehschwingungsdämpferanordnung (70) nach Anspruch 14 oder 15, **dadurch gekennzeichnet, dass** das dritte Stirnrad (34) und das vierte Stirnrad (37) außerdem mit einem einzigen Hohlrad (47) des Getriebes (46) kämmen.

17. Drehschwingungsdämpferanordnung (40, 80) nach Anspruch 14, **dadurch gekennzeichnet, dass** das antriebseitige Übertragungselement des Getriebes (44, 48) als ein erstes Hohlrad (41) und das abtriebseitige Übertragungselement des Getriebes (44, 48) als ein zweites Hohlrad (42) ausgebildet ist.

18. Drehschwingungsdämpferanordnung (80) nach einem der Ansprüche 14 oder 17, **dadurch gekennzeichnet, dass** das dritte Stirnrad (34) und das vierte Stirnrad (37) außerdem mit einem einzigen Sonnenrad (49) des Getriebes (48) kämmen.

19. Drehschwingungsdämpferanordnung (80) nach Anspruch 18, **dadurch gekennzeichnet, dass** das dritte Stirnrad (34) auf einem ersten Wellenabschnitt (37a) und das vierte Stirnrad (37) auf einem zweiten Wellenabschnitt (37b) einer geteilten Welle drehfest angeordnet sind.

## Claims

1. Torsional vibration damping arrangement (30, 40, 50, 60, 70, 80), mounted in a housing (1, 12), in a drive train of a vehicle, having a drive-side transmission element (2, 13) and an output-side transmission element (3, 18) as well as a planetary gear mechanism (5, 16) which is arranged between the drive-side transmission element (2, 13) and the output-side transmission element (3, 18) and has a sun gear (6), a web (7) which bears at least one planetary gear (8), and a ring gear (9), and having at least one energy storage and damping element (4) which engages on the planetary gear mechanism (5, 16), wherein one of the planetary gear mechanism elements, specifically the sun gear (6) or the web (7) or the ring gear (9) can be coupled to the housing (1, 12) by means of the at least one energy storage and damping element (4), **characterized in that** a freewheel (10) is arranged between the one planetary gear mechanism element (6, 7, 9) and the energy storage and damping element (4).

2. Torsional vibration damping arrangement according to Claim 1, **characterized in that** the planetary gear mechanism (5, 16) is arranged within a vehicle transmission (5, 16).

3. Torsional vibration damping arrangement according to Claim 2, **characterized in that** the vehicle transmission (5, 16) is embodied as an automatic planetary gear mechanism (19), as an automatic spur gear mechanism or as an automatic group transmission with an input transmission, a main transmission and/or a range transmission, wherein the individual partial transmissions are embodied as spur gear mechanisms or as planetary gear mechanisms.

4. Torsional vibration damping arrangement according to Claim 3, **characterized in that** the automatic planetary gear mechanism (19) has at least one planetary gear mechanism set (16b) with a housing connection, and at least one of the planetary gear mechanism elements (6, 7, 9) of at least one planetary gear mechanism set (16b) can be coupled to the transmission housing (12) via at least one energy storage and damping element (4).

5. Torsional vibration damping arrangement according to Claim 3, **characterized in that** the automatic planetary gear mechanism (19) has at least two planetary gear mechanism sets (16a; 16b; 16c; 16d) with a housing connection, and **in that** one of the planetary gear mechanism elements (6, 7, 9) of each of the at least two planetary gear mechanism sets (16a; 16b; 16c; 16d) with a housing connection can be coupled to the transmission housing (12).

6. Torsional vibration damping arrangement according to Claim 5, **characterized in that** the planetary gear mechanism elements (6, 7, 9) of the at least two planetary gear mechanism sets (16a; 16b; 16c; 16d) with a housing connection can be coupled to the transmission housing (12) in a parallel and/or serial connection.

7. Torsional vibration damping arrangement according to one of Claims 1 to 6, **characterized in that** the energy storage and damping element (4) has at least one damping member (21) and at least one helical compression spring (20) which are arranged in a circumferential groove (17) in the transmission housing (12).

8. Torsional vibration damping arrangement according to Claim 7, **characterized in that** the circumferential groove (17) runs in a spiral shape over more than one circumferential length in an axial direction of the transmission housing (12).

9. Torsional vibration damping arrangement according to Claim 7 or 8, **characterized in that** the helical compression spring (20) is inserted in the circumferential groove (17) in the circumferential direction and is supported by one end on the sun gear (6) or web (7) or ring gear (9), and is supported by its other end on a stop in the circumferential groove (17).

10. Torsional vibration damping arrangement according to Claims 7 to 9, **characterized in that** the damping member (21) is inserted in the circumferential groove (17) in the circumferential direction and is supported by one end on the sun gear (6) or web (7) or ring gear (9), and is supported by its other end on a stop in the circumferential groove (17).

11. Torsional vibration damping arrangement according to one of Claims 1 to 10, **characterized in that** the planetary gear mechanism (5, 16a-16d) thereof is embodied as a minus gear mechanism with a static transmission ratio < 0 or as a plus gear mechanism with a static transmission ratio > 0.

12. Torsional vibration damping arrangement according to one of Claims 1 to 11, **characterized in that** the planetary gears (8) of the planetary gear mechanism (5, 16a-16d) of the torsional vibration damping arrangement are embodied as stepped planetary gears.

13. Torsional vibration damping arrangement according to one of Claims 1 to 12, **characterized in that** the planetary gears (8) of the planetary gear mechanism (5, 16a-16d) of the torsional vibration damping arrangement are embodied as spur gears or as bevel gears.

14. Torsional vibration damping arrangement (30, 40, 70, 80), mounted in a housing (1), for the drive train of a vehicle, which is to be arranged in terms of drive technology between an internal combustion engine (31) and a vehicle transmission (45),
wherein the torsional vibration damping arrangement (30, 40, 70, 80) has a transmission (43, 44, 46, 48) with a drive-side transmission element (33, 41) and an output-side transmission element (38, 42),
wherein the drive-side transmission element (33, 41) can be connected to the drive shaft (32) of the internal combustion engine (31), and the output-side transmission element (38, 42) can be connected to the input shaft (36) of the vehicle transmission (45),
in which the drive-side transmission element (33, 41) is embodied as a first gear wheel which meshes with a second gear wheel (34) which is arranged in a rotationally fixed fashion on a shaft (35; 35a),
in which a third gear wheel (37) is arranged in a rotationally fixed fashion on the shaft (35; 35b) and meshes with the output-side transmission element (38, 42) which is embodied as a fourth gear wheel,
having at least one carrier (39) which supports the shaft (35; 35a, 35b), a ring gear (47) or a sun gear (49) of the transmission (43, 44, 46, 48),
wherein an energy storage and damping element (4) engages on the carrier (39), which energy storage and damping element (4) has at least one damping member (21) and at least one helical compression spring (20) which are arranged in parallel with one another in the direction of action, and in which the energy storage and damping element (4) is or can be connected radially on the outside to the housing (1).

15. Torsional vibration damping arrangement (30, 70) according to Claim 14, **characterized in that** the drive-side transmission element and the output-side transmission element of the transmission (43, 46) are each embodied as spur gears (33, 38).

16. Torsional vibration damping arrangement (70) according to Claim 14 or 15, **characterized in that** the third spur gear (34) and the fourth spur gear (37) also mesh with a single ring gear (47) of the transmission (46).

17. Torsional vibration damping arrangement (40, 80) according to Claim 14, **characterized in that** the drive-side transmission element of the transmission (44, 48) is embodied as a first ring gear (41), and the output-side transmission element of the transmission (44, 48) is embodied as a second ring gear (42).

18. Torsional vibration damping arrangement (80) according to one of Claims 14 and 17, **characterized in that** the third spur gear (34) and the fourth spur gear (37) also mesh with a single sun gear (49) of the transmission (48).

19. Torsional vibration damping arrangement (80) according to Claim 18, **characterized in that** the third spur gear (34) is arranged in a rotationally fixed fashion on a first shaft section (37a), and the fourth spur gear (37) is arranged in a rotationally fixed fashion on a second shaft section (37b), of a split shaft.

## Revendications

1. Ensemble amortisseur de vibrations de torsion (30, 40, 50, 60, 70, 80) monté dans un boîtier (1, 12) dans une chaîne cinématique d'un véhicule automobile, avec un élément de transmission côté menant (2, 13) et un élément de transmission côté mené (3, 18) ainsi qu'avec un engrenage planétaire (5, 16) disposé entre l'élément de transmission côté menant (2, 13) et l'élément de transmission côté mené (3, 18), qui présente une roue solaire (6), une entretoise (7) portant au moins un satellite (8) et une couronne dentée (9), et avec au moins un élément d'accumulation d'énergie et d'amortissement (4) agissant sur l'engrenage planétaire (5, 16), dans lequel un des éléments de l'engrenage planétaire, à savoir la roue solaire (6) ou l'entretoise (7) ou la couronne dentée (9), peut être couplé au boîtier (1, 12) par ledit au moins un élément d'accumulation d'énergie et d'amortissement (4), **caractérisé en ce qu'**une roue libre (10) est disposée entre ledit un élément de l'engrenage planétaire (6, 7, 9) et l'élément d'accumulation d'énergie et d'amortissement (4).

2. Ensemble amortisseur de vibrations de torsion selon la revendication 1, **caractérisé en ce que** l'engrenage planétaire (5, 16) est disposé à l'intérieur d'une transmission de véhicule (5, 16).

3. Ensemble amortisseur de vibrations de torsion selon la revendication 2, **caractérisé en ce que** la transmission de véhicule (5, 16) est constituée par une transmission automatique planétaire (19), par une transmission automatique à pignon droit, ou par une transmission automatique à groupe avec un réducteur primaire, une transmission principale et/ou une transmission à zones, dans lequel les engrenages partiels individuels sont réalisés sous forme d'engrenages à pignons droits ou sous forme d'engrenages planétaires.

4. Ensemble amortisseur de vibrations de torsion selon la revendication 3, **caractérisé en ce que** la transmission automatique planétaire (19) présente au moins un jeu d'engrenages planétaires (16b) avec liaison au boîtier et au moins un des éléments d'engrenage planétaire (6, 7, 9) d'au moins un jeu d'engrenages planétaires (16b) peut être couplé au boîtier de transmission (12) par au moins un élément d'accumulation d'énergie et d'amortissement (4).

5. Ensemble amortisseur de vibrations de torsion selon la revendication 3, **caractérisé en ce que** la transmission automatique planétaire (19) présente au moins deux jeux d'engrenages planétaires (16a; 16b; 16c; 16d) avec liaison au boîtier, et **en ce qu'**un des éléments d'engrenage planétaire (6, 7, 9) de chacun desdits au moins deux jeux d'engrenages planétaires (16a; 16b; 16c; 16d) avec liaison au boîtier peut être couplé au boîtier de transmission (12).

6. Ensemble amortisseur de vibrations de torsion selon la revendication 5, **caractérisé en ce que** les éléments d'engrenage planétaire (6, 7, 9) desdits au moins deux jeux d'engrenages planétaires (16a; 16b; 16c; 16d) avec liaison au boîtier peuvent être couplés au boîtier de transmission (12) selon un agencement en parallèle et/ou en série.

7. Ensemble amortisseur de vibrations de torsion selon l'une quelconque des revendications 1 à 6, **caractérisé en ce que** l'élément d'accumulation d'énergie et d'amortissement (4) présente au moins un élément d'amortissement (21) et au moins un ressort de pression hélicoïdal (20), qui sont disposés dans une rainure périphérique (17) dans le boîtier de transmission (12).

8. Ensemble amortisseur de vibrations de torsion selon la revendication 7, **caractérisé en ce que** la rainure périphérique (17) s'étend dans la direction axiale du boîtier de transmission (12) sous forme de spirale sur plus d'une longueur de périphérie.

9. Ensemble amortisseur de vibrations de torsion selon la revendication 7 ou 8, **caractérisé en ce que** le ressort de pression hélicoïdal (20) est introduit en direction périphérique dans la rainure périphérique (17) et s'appuie par une extrémité sur la roue solaire (6) ou l'entretoise (7) ou la couronne dentée (9), et il s'appuie par son autre extrémité sur une butée dans la rainure périphérique (17).

10. Ensemble amortisseur de vibrations de torsion selon la revendication 7 à 9, **caractérisé en ce que** l'élément d'amortissement (21) est introduit en direction périphérique dans la rainure périphérique (17) et il s'appuie par une extrémité sur la roue solaire (6) ou l'entretoise (7) ou la couronne dentée (9), et il s'appuie par son autre extrémité sur une butée dans la rainure périphérique (17).

11. Ensemble amortisseur de vibrations de torsion selon l'une quelconque des revendications 1 à 10, **caractérisé en ce que** ses engrenages planétaires (5, 16a-16d) sont réalisés comme engrenages moins avec un rapport de transmission < 0 ou comme engrenages plus avec un rapport de transmission > 0.

12. Ensemble amortisseur de vibrations de torsion selon l'une quelconque des revendications 1 à 11, **caractérisé en ce que** les satellites (8) de l'engrenage planétaire (5, 16a-16d) de l'ensemble amortisseur de vibrations de torsion sont réalisés sous forme de satellites étagés.

13. Ensemble amortisseur de vibrations de torsion selon l'une quelconque des revendications 1 à 12, **caractérisé en ce que** les satellites (8) de l'engrenage planétaire (5, 16a-16d) de l'ensemble amortisseur de vibrations de torsion sont réalisés sous forme de pignons droits ou de pignons coniques.

14. Ensemble amortisseur de vibrations de torsion (30, 40, 70, 80) monté dans un boîtier (1) pour la chaîne cinématique d'un véhicule automobile, qui doit être disposé pour l'entraînement entre un moteur à combustion interne (31) et une boîte de vitesses de véhicule (45),
dans lequel l'ensemble amortisseur de vibrations de torsion (30, 40, 70, 80) présente une transmission (43, 44, 46, 48) avec un élément de transmission côté menant (33, 41) et un élément de transmission côté mené (38, 42),
dans lequel l'élément de transmission côté menant (33, 41) peut être relié à l'arbre de commande (32) du moteur à combustion interne (31) et l'élément de transmission côté mené (38, 42) peut être relié à l'arbre d'entrée (36) de la boîte de vitesses de véhicule (45),
dans lequel l'élément de transmission côté menant (33, 41) est constitué par une première roue dentée, qui engrène avec une deuxième roue dentée (34) calée sur un arbre (35; 35a),
dans lequel une troisième roue dentée (37) est calée sur l'arbre (35; 35b), qui engrène avec l'élément de transmission côté mené (38, 42) réalisé comme quatrième roue dentée,
avec au moins un support (39), qui supporte l'arbre (35; 35a, 35b), une couronne dentée (47) ou une roue solaire (49) de la transmission (43, 44, 46, 48),
dans lequel un élément d'accumulation d'énergie et d'amortissement (4) agit sur le support (39) et présente au moins un élément d'amortissement (21) et au moins un ressort de pression hélicoïdal (20), qui sont disposés parallèlement l'un à l'autre dans la direction d'action,
et dans lequel l'élément d'accumulation d'énergie et d'amortissement (4) est ou peut être relié radialement à l'extérieur au boîtier (1).

15. Ensemble amortisseur de vibrations de torsion (30, 70) selon la revendication 14, **caractérisé en ce que** l'élément de transmission côté menant et l'élément de transmission côté mené de la transmission (43, 46) sont réalisés respectivement sous forme de pignons droits (33, 38).

16. Ensemble amortisseur de vibrations de torsion (70) selon la revendication 14 ou 15, **caractérisé en ce que** le troisième pignon droit (34) et le quatrième pignon droit (37) engrènent par ailleurs avec une seule couronne dentée (47) de la transmission (46).

17. Ensemble amortisseur de vibrations de torsion (40, 80) selon la revendication 14, **caractérisé en ce que** l'élément de transmission côté menant de la transmission (44, 48) est réalisé sous la forme d'une première couronne dentée (41) et l'élément de transmission côté mené de la transmission (44, 48) est réalisé sous la forme d'une deuxième couronne dentée (42).

18. Ensemble amortisseur de vibrations de torsion (80) selon une des revendications 14 ou 17, **caractérisé en ce que** le troisième pignon droit (34) et le quatrième pignon droit (37) engrènent par ailleurs avec une roue solaire unique (49) de la transmission (48).

19. Ensemble amortisseur de vibrations de torsion (80) selon la revendication 18, **caractérisé en ce que** le troisième pignon droit (34) est calé sur une première partie d'arbre (37a) et le quatrième pignon droit (37) est calé sur une deuxième partie d'arbre (37b) d'un arbre divisé.
